# EUROPEAN PATENT SPECIFICATION

(11) **EP 2 258 506 B1**
(45) Date of publication and mention of the grant of the patent: **20.05.2015**
(21) Application number: 08873700.2
(22) Date of filing: 15.12.2008
(51) Int. Cl.: B23D 61/02, B23D 21/00, B23D 45/18, B23D 47/02, B23D 45/12

(54) **METHOD OF MANUFACTURING SEAMLESS TUBE**
VERFAHREN ZUR HERSTELLUNG EINES NAHTLOSEN ROHRS
PROCÉDÉ DE FABRICATION DE TUBE SANS SOUDURE

(30) Priority: 31.03.2008 JP 2008091071
(43) Date of publication of application: 08.12.2010
(73) Proprietor: Nippon Steel & Sumitomo Metal Corporation, Tokyo 100-8071 (JP)
(72) Inventor: KOUCHI, Yasuhiro, Osaka-shi Osaka 541-0041 (JP); KANDA, Osamu, Osaka-shi Osaka 541-0041 (JP)
(74) Representative: Zimmermann & Partner Patentanwälte mbB
(86) International application number: PCT/JP2008/072735
(87) International publication number: WO 2009/122619

(56) References cited:
- CN-U- 2 097 050
- JP-A- 8 215 932
- JP-A- H04 122 519
- SU-A- 1 808 518

## Description

### Technical Field

The present invention relates to a method of manufacturing a seamless pipe or tube as per the preamble of claim 1. More particularly, it relates to a method of manufacturing a seamless pipe or tube, which facilitate generation of burrs only on either one of cut billets when a billet for manufacturing a seamless pipe or tube is cut, whereby the occurrence of outer surface flaws on the seamless pipe or tube can be restrained. Hereinafter, "pipe or tube" is referred to as "pipe" when deemed appropriate.

### Background Art

In the manufacture of a seamless pipe using the Mannesmann-mandrel mill system, first, a billet, which is a starting material, is heated in a rotary hearth type heating furnace, and then is supplied to a rolling line in sequence. Specifically, a billet is piercing-rolled using a piercer plug and a rolling roll in a piercing-rolling mill to produce a hollow shell. Next, a mandrel bar is inserted into the hollow shell, like an inserted skewer, and the outer surface of the hollow shell is drawn and rolled by a mandrel mill provided with a plurality of rolling stands while being restrained by a grooved roll, whereby the wall thickness of hollow shell is reduced to a predetermined value. Thereafter, the mandrel bar is removed, and the hollow shell whose wall thickness has been reduced is sized by a sizing mill provided with a plurality of rolling stands so as to have a predetermined outside diameter, thereby obtaining a product.

The billet having been heated in the heating furnace is cut to a length according to the product length of seamless pipe before being piercing-rolled by the piercing-rolling mill. To cut the billet, there is used a substantially circular rotary cutting tool provided with a plurality of blade parts along the outer peripheral portion thereof. While this rotary cutting tool is rotated in the circumferential direction, the rotary cutting tool is moved from the direction substantially at right angles to the longitudinal direction of billet toward the billet, whereby the billet is cut in the direction substantially at right angles to the longitudinal direction thereof.

In the center of the end face of each of billets obtained after cutting (hereinafter, the cut billet piece is referred to as a "billet piece" when deemed appropriate to distinguish it from the billet before cutting), a concave is formed by a centering machine. This centering machine has a clamp and a punch and pushes the punch against the center of the end face on one end portion side of billet to form the concave while the outer surface of that one end portion thereof is held by the clamp. On the piercing-rolling mill, the front end of the piercer plug comes into contact with this concave of billet piece, and the billet piece is piercing-rolled.

In this process, on the outer surface of the hollow shell having been piercing-rolled, and in turn, on the outer surface of the seamless pipe, an outer surface flaw such as an eruption of the skin, which is called an outer eruption flaw, may occur. It is desired to restrain the occurrence of this outer surface flaw.

SU 1 808 518 A discloses a rotary cutting tool with a plurality of blade parts with tilted end faces, and a method as per the preamble of claim 1.

### Disclosure of the Invention

The present invention has been made in view of the above-described prior art, and accordingly an object thereof is to provide a method of manufacturing a seamless pipe or tube, which are capable of restraining the occurrence of an outer surface flaw on the seamless pipe.

To solve the above-described problem, the present inventor conducted studies earnestly on the cause of the occurrence of outer surface flaw (outer eruption flaw) on the seamless pipe. As the result, the present inventor found that one cause of the occurrence of outer surface flaw is the burrs occurring in an end portion of the cut billet piece when the billet for manufacturing the seamless pipe is cut in the direction substantially at right angles to the longitudinal direction of the billet. Specifically, it was found that if burrs occur in the end portion on the side on which the concave is formed by the centering machine, the burrs are pressed against the outer surface of billet piece when the concave is formed by the centering machine, and may induce the outer surface flaw.

The present inventor further conducted the studies, and obtained a knowledge described below.

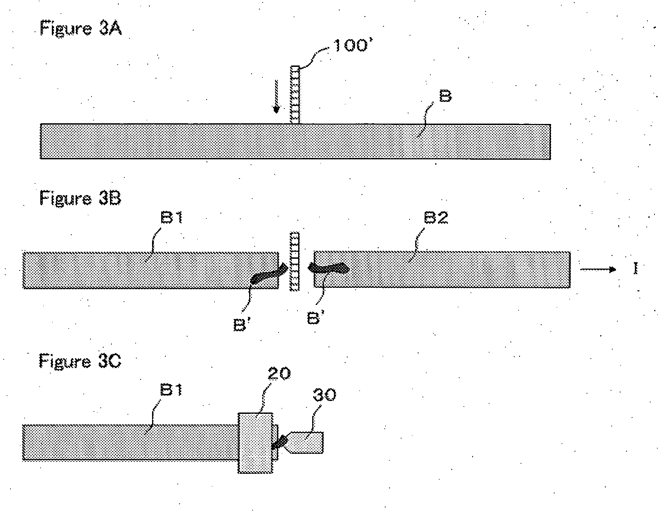

In the conventional rotary cutting tool used for cutting a billet, the end face on the downstream side in the direction of rotation of the blade part (the end face on the side on which the outer surface of billet is cut) is parallel to the thickness direction of rotary cutting tool intersecting at right angles to the direction of rotation. As shown in Figures 3A, 3B and 3C, when a billet B is cut in the direction substantially at right angles to the longitudinal direction of billet by using a conventional rotary cutting tool 100', cutting chips, which are a cause of burrs, may flow in any directions of the thickness direction of rotary cutting tool. That is, in the end portions of both of billet pieces Bland B2 after cutting, burrs B' may occur. Therefore, if both the cut billet pieces B1 and B2 on which the burrs B' have occurred are conveyed in the same direction (the direction indicated by the arrow mark I in Figure 3B) of the longitudinal direction of billet pieces, and the concave is formed by using the centering machine (as shown in Figure 3C, having a clamp 20 and a punch 30), for either one billet piece (in the example shown in Figures 3A, 3B and 3C, the billet piece B1), the concave is formed in the end face of the end portion on the side on which the burrs B' have occurred, so that an outer surface flaw may occur on the billet piece B1, and in turn, on the seamless pipe. Thereupon, it was found that to restrain the occurrence of outer surface flaw, cutting can be performed so as to facilitate generation of burrs only in the end portion of either one of cut billet pieces, and the concave can be provided in the end face of the end portion on the side opposite to the side on which the burrs have occurred.

The present inventor completed the present invention based on the above-described new knowledge.

The present invention uses a rotary cutting tool of substantially circular shape which is provided with a plurality of blade parts along the outer peripheral portion thereof, wherein the end face on the downstream side in the direction of rotation of the blade part tilts at an angle not smaller than 1 degree and not larger than 10 degrees with respect to the thickness direction intersecting at right angles to the direction of rotation.

The end face on the downstream side in the direction of rotation of the blade part is not parallel to the thickness direction of rotary cutting tool intersecting at right angles to the direction of rotation, but is tilted. Therefore, if the billet for manufacturing a seamless pipe or tube is cut in the direction substantially at right angles to the longitudinal direction thereof by using the rotary cutting tool in accordance with the present invention, cutting chips, which are a cause of burrs, are liable to flow along the tilt of the end face on the downstream side in the direction of rotation of the blade part. That is, the cutting chips are liable to flow toward the side separating from a face parallel to the thickness direction of the rotary cutting tool. Therefore, generation of burrs is facilitated only in the end portion of a billet piece on the side on which cutting chips are liable to flow (hereinafter, referred to as a "burr-producing billet piece") of both the cut billet pieces. For this reason, if both the billet pieces are conveyed in the same direction of the longitudinal direction thereof, and a concave is formed by a centering machine so that the concave is provided in the end face of the end portion on the side opposite to the side on which the burrs occur of the burr-producing billet piece, the burrs are not pressed against the outer surfaces of the billet pieces, and the occurrence of outer surface flaw can be restrained. The reason why the lower limit of the relief angle (the angle formed with respect to the thickness direction of rotary cutting tool) of the end face on the downstream side in the direction of rotation of the blade part is set at 1 degree is that if the lower limit thereof is smaller than 1 degrees, like the conventional rotary cutting tool, a possibility that the cutting chips may also flow in any directions of the thickness direction of rotary cutting tool increases. Also, the reason why the upper limit of the relief angle is set at 10 degrees is that if the upper limit thereof exceeds 10 degrees, the interfacial pressure applied to an edge contact part of the blade part increases, and exceeds the mechanical strength of blade part, so that the blade part is liable to be chipped or cracked, which leads to a decrease in service life of rotary cutting tool. In order to allow the cutting chips to flow further easily along the tilt of the end face on the downstream side in the direction of rotation of the blade part, the relief angle of the end face on the downstream side in the direction of rotation of the blade part is preferably set at 3 degrees or larger.

In order to solve the above-described problem, the present invention provides a method of manufacturing a seamless pipe or tube, as per claim 1.

According to the method of claim 1, when a billet for manufacturing a seamless pipe or tube is cut, generation of burrs is facilitated only on either one of cut billets, whereby the occurrence of outer surface flaws on the seamless pipe or tube can be restrained.

### Brief Description of the Drawings

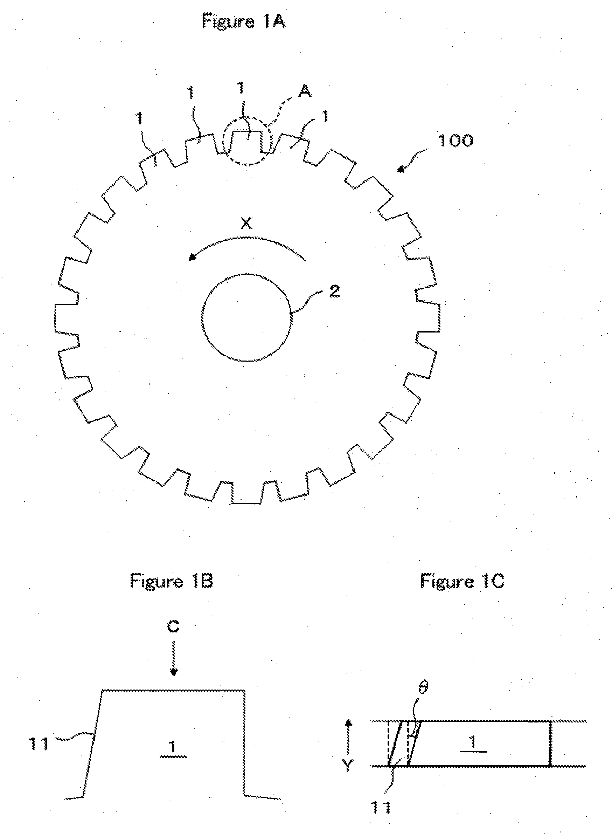

Figures 1A, 1B and 1C are schematic views showing a general configuration of a rotary cutting tool, Figure 1A being a front view showing the whole of the rotary cutting tool, Figure 1B being an enlarged view of the region A of Figure 1A, and Figure 1C being a top view of a blade part as viewed from the direction indicated by the arrow mark C in Figure 1B;

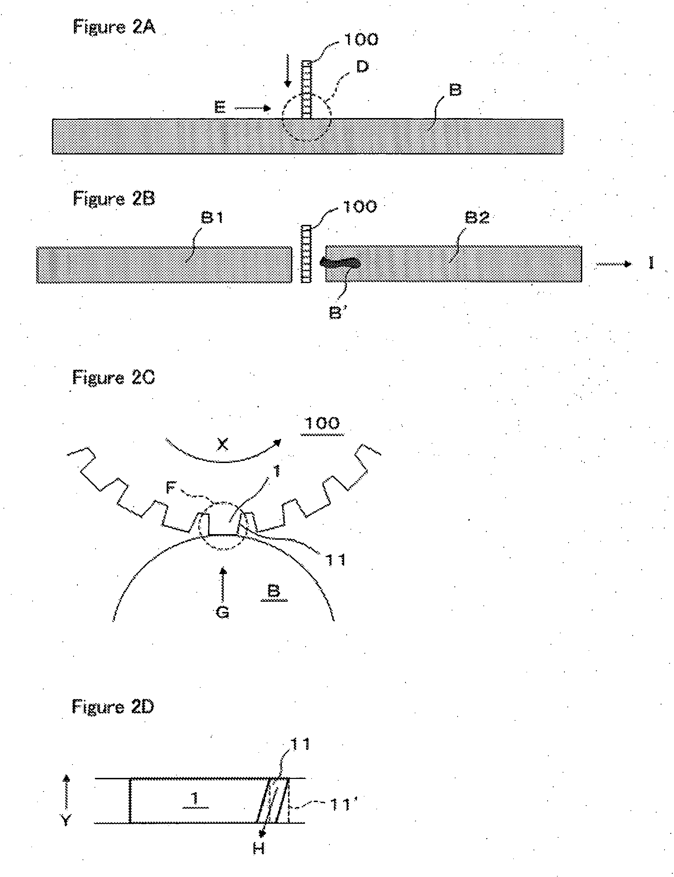

Figures 2A, 2B, 2C and 2D are explanatory views for explaining a method of cutting a billet for manufacturing a seamless pipe by using a rotary cutting tool, Figure 2A being a side view showing a state in which a cutting operation is started, Figure 2B being a side view showing a state in which the cutting operation is finished, Figure 2C being an enlarged front view of the region D of Figure 2A as viewed from the direction indicated by the arrow mark E in Figure 2A, and Figure 2D being an enlarged top view of the region F as viewed from the direction indicated by the arrow mark G in Figure 2C; and
Figures 3A, 3B and 3C are explanatory views for explaining a method of cutting a billet for manufacturing a seamless pipe by using a conventional rotary cutting tool, Figure 3A being a side view showing a state in which a cutting operation is started, Figure 3B being a side view showing a state in which the cutting operation is finished, Figure 3C being a side view showing a state in which a concave is being formed, by using a centering machine, in the end face of the billet having been cut.

### Best Mode for Carrying Out the Invention

Figures 1A, 1B and 1C are schematic views showing a general configuration of a rotary cutting tool, Figure 1A being a front view showing the whole of the rotary cutting tool, Figure 1B being an enlarged view of the region A of Figure 1A, and Figure 1C being a top view of a blade part as viewed from the direction indicated by the arrow mark C in Figure 1B.

As shown in Figures 1A, 1B and 1C, the rotary cutting tool 100 in accordance with this embodiment is a rotary cutting tool of substantially circular shape which is provided with a plurality of blade parts 1 along the outer peripheral portion thereof, and can be rotated in the circumferential direction. The rotary cutting tool 100 is provided with a shaft hole 2 in the center thereof. The rotary cutting tool 100 is installed to a cutting device (not shown) so as to be rotatable around the center axis via the shaft hole 2.

For the rotary cutting tool 100 in accordance with this embodiment, an end face 11 on the downstream side in the direction of rotation (the direction indicated by the arrow mark X in Figure 1A) of the blade part 1 tilts at a relief angle θ with respect to the thickness direction (the direction indicated by the arrow mark Y in Figure 1C) intersecting at right angles to the direction of rotation. This relief angle θ is set at not smaller than 1 degree and not larger than 10 degrees (preferably, not smaller than 3 degrees and not larger than 10 degrees).

Figures 2A, 2B, 2C and 2D are explanatory views for explaining a method of cutting a billet for manufacturing a seamless pipe by using a rotary cutting tool, Figure 2A being a side view showing a state in which a cutting operation is started, Figure 2B being a side view showing a state in which the cutting operation is finished, Figure 2C being an enlarged front view of the region D of Figure 2A as viewed from the direction indicated by the arrow mark E in Figure 2A, and Figure 2D being an enlarged top view of the region F as viewed from the direction indicated by the arrow mark G in Figure 2C.

As shown in Figures 2A, 2B, 2C and 2D, in a state of being rotated, the rotary cutting tool 100 is moved from the direction substantially at right angles to the longitudinal direction of a billet B toward the billet B, whereby the billet B is cut in the direction substantially at right angles to the longitudinal direction thereof, and billet pieces B1 and B2 are formed. At this time, cutting chips, which are a cause of burrs, are liable to flow along the tilt of the end face 11 on the downstream side in the direction of rotation of the blade part 1 of the rotary cutting tool 100. That is, the cutting chips are liable to flow toward the side separating from a face 11' (the direction indicated by the arrow mark H in Figure 2D) parallel to the thickness direction of the rotary cutting tool 100 (the direction indicated by the arrow mark Y in Figure 2D). Therefore, generation of burrs B' is facilitated only in the end portion of a billet piece on the side on which cutting chips are liable to flow (in the example shown in Figures 2A, 2B, 2C and 2D, the billet B2) of both the cut billet pieces B1 and B2. For this reason, if both the billet pieces B1 and B2 are conveyed in the same direction (the direction indicated by the arrow mark I in Figure 2B) of the longitudinal direction thereof, and a concave is formed by a centering machine so that the concave is provided in the end face of the end portion on the side opposite to the side on which the burrs B' occur of the billet piece B2, the burrs B' are not pressed against the outer surfaces of the billet pieces B1 and B2, and the occurrence of outer surface flaw can be restrained.

To the method of manufacturing a seamless pipe by using the billet pieces B1 and B2 having been cut as described above, the conventionally known method can be applied. Therefore, the detailed explanation of the method is omitted herein.

Table 1 gives the result of evaluation of the rate of occurrence of outer eruption flaw (= the number of seamless pipes on which the outer eruption flaw has occurred/the number of seamless pipes being evaluated x 100) on the outer surface of a seamless pipe manufactured by using billet pieces cut from a billet made for manufacturing a seamless pipe, which was cut to form the billet pieces by using the rotary cutting tools in accordance with the present invention (examples of θ = 1°, 3°, 7° and 10°), the conventional rotary cutting tool (θ = 0°), and the rotary cutting tool of comparative example (θ = 15°).

**[Table 1]**

| | Relief angle *θ* | Location where bums occur | Rate of occurrence of outer eruption flaw |
|---|---|---|---|
| Comparative example (conventional) | 0° | Burrs occur on both billet pieces after cutting | 4.57% |
| Present invention | 1° | Burrs occur in large amounts on one billet piece | 3.56% |
| Present invention | 3° | Burrs occur only on one billet piece | 0.76% |
| Present invention | 7° | Burrs occur only on one billet piece | 0.72% |
| Present invention | 10° | Burrs occur only on one billet piece | 0.75% |
| Comparative example | 15° | Not evaluated because blade part was chipped | |

As shown in Table 1, it was found that if the rotary cutting tool is used, the occurrence of outer eruption flaw can be restrained as compared with the case where the conventional rotary cutting tool (θ = 0°) is used. In particular, in the case where the relief angle was set at not smaller than 3 degrees and not larger than 10 degrees, the occurrence of outer eruption flaw could be restrained significantly.

On the other hand, if the rotary cutting tool in which the relief angle θ was set at 15 degrees was used, the blade part thereof was chipped, so that the cutting test was halted inevitably.

## Claims

1. A method of manufacturing a seamless pipe or tube by using a rotary cutting tool (100) of substantially circular shape, the rotary cutting tool (100) having a direction of rotation (X) around a center axis and having a thickness direction (Y) which is formal to the direction of rotation (X) and is parallel to the center axis, and the rotary cutting tool (100) being provided with a plurality of blade parts (1) along the outer peripheral portion thereof, wherein an end face (11) on the downstream side in the direction of rotation (X) of the blade part (1) is tilted in a tilting direction (H) at an angle not smaller than 1 degree and not larger than 10 degree with respect to the thickness direction (Y), the method being **characterized by** the steps of:
cutting a billet (B) for manufacturing a seamless pipe or tube in the direction substantially at a right angle to the longitudinal direction (I) thereof by using the rotary cutting tool (100) to make first and second billet pieces (B1, B2);
forming a concave on an end face opposite to a cut surface of the first billet piece (B2) which is located in the tilting direction (H) of the end face (11) of the blade part (1), and forming a concave on a cut surface of the second billet piece (B1); and
piercing-rolling each of billet pieces (B1, B2) with the front end of a piecer plug coming into contact with the concave of each of billet pieces (B1, B2).

## Patentansprüche

1. Verfahren zur Herstellung eines nahtlosen Rohrs oder einer nahtlosen Röhre unter Verwendung eines rotierenden Schneidwerkzeugs (100) mit einer im Wesentlichen kreisförmigen Form, wobei das rotierende Schneidwerkzeug (100) eine Rotationsrichtung (X) um eine Mittelachse und eine Dicken-Richtung (Y), die senkrecht zu der Rotationsrichtung (X) und parallel zu der Mittelachse ist, aufweist und wobei das rotierende Schneidwerkzeug (100) mit einer Vielzahl von Schneidteilen (1) entlang seines äußeren Umfangabschnitts ausgestattet ist, wobei eine Endfläche (11) auf der stromabwärtigen Seite in der Rotationsrichtung (X) des Schneidteils (1) in einer Neigungsrichtung (H) in einem Winkel von nicht weniger als 1 Grad und nicht größer als 10 Grad in Bezug auf die Dickenrichtung (Y) geneigt ist, wobei das Verfahren durch die folgenden Schritte gekennzeichnet ist:
Schneiden eines Barrens (B) für die Herstellung eines nahtlosen Rohrs oder einer nahtlosen Röhre in der Richtung, die im Wesentlichen im rechten Winkel zu seiner Längsrichtung (I) ist, indem das rotierende Schneidwerkzeug (100) verwendet wird, um erste und zweite Barrenstücke herzustellen (B1, B2);
Bilden eines Konkaves an einer Endfläche entgegengesetzt zu einer Schnittfläche des ersten Barrenstücks (B2), das sich in der Neigungsrichtung (H) der Endfläche (11) des Schneidteils (1) befindet, und Bilden eines Konkaves an einer Schnittfläche des zweiten Barrenstücks (B1); und
Lochwalzen jedes Barrenstücks (B1, B2) mit dem vorderen Ende eines Lochdorns, der in Kontakt mit dem Konkav jedes der Barrenstücke (B1, B2) kommt.

## Revendications

1. Procédé pour fabriquer un tuyau ou tube sans soudure en utilisant un outil de coupe rotatif (100) de forme sensiblement circulaire, l'outil de coupe rotatif (100) ayant une direction de rotation (X) autour d'un axe central et ayant une direction d'épaisseur (Y) qui est perpendiculaire à la direction de rotation (X) et est parallèle à l'axe central, et l'outil de coupe rotatif (100) étant prévu avec une pluralité de parties de lame (1) le long de sa partie périphérique externe, dans lequel une face d'extrémité (11) du côté en aval, dans la direction de rotation (X) de la partie de lame (1) est inclinée dans une direction d'inclinaison (H) selon un angle non inférieur à 1 degré et non supérieur à 10 degrés par rapport à la direction d'épaisseur (Y), le procédé étant **caractérisé par** les étapes consistant à :
couper une billette (B) pour fabriquer un tuyau ou tube sans soudure dans la direction sensiblement en angle droit par rapport à sa direction longitudinale (I) en utilisant l'outil de coupe rotatif (100) pour réaliser des première et seconde pièces de billette (B1, B2) ;
former une concavité sur une face d'extrémité opposée à une surface de coupe de la première pièce de billette (B2) qui est positionnée dans la direction d'inclinaison (H) de la face d'extrémité (11) de la partie de lame (1), et formant une concavité sur une surface de coupe de la seconde pièce de billette (B1) ; et
percer-laminer chacune des pièces de billette (B1, B2) avec l'extrémité avant d'un mandrin qui vient en contact avec la concavité de chacune des pièces de billette (B1, B2).
